# EUROPEAN PATENT APPLICATION

(11) **EP 3 912 857 A1**
(43) Date of publication of application: **24.11.2021**
(21) Application number: 21460018.1
(22) Date of filing: 26.03.2021
(51) Int. Cl.: B60P 3/04

(54) **HORSE TRAILER AND HORSE TRAILER TACK ROOM**

(30) Priority: 22.05.2020 PL 43404920
(71) Applicant: DEBON Spólka z ograniczona odpowiedzialnoscia, 63-830 Pepowo (PL)
(72) Inventor: MALECKI, Bogdan, 63-830 Pepowo (PL)

(57) **Abstract**

According to the invention, the horse trailer, having side walls, a roof, a front wall and a tilting rear wall, resting on a wheeled chassis with a floor, with the trailer composed of space to transport a horse or horses and space constituting a tack room to transport and store saddles and other accessories in the front part of the trailer and separated from the part where a horse is or horses are transported, characterised in that the tack room (S) is a self-supporting chamber (1) fixed in the trailer to its permanent components in a detachable way, the chamber (1) shape resembling letter "V" and having door (9) constituting side walls (2) of the chamber (1). The chamber (1) in the first version has a frame (3) made from a vertical U-iron post (4) with obtuse arms, from which, in its upper part, there are two horizontal angle bars (5) led towards the chamber (1) front, their ends connected to vertical profiles (6), while in the lower part of the vertical post (4) there are two horizontal angle bars (7) connected to the lower endings of the vertical profiles (6), and the upper angle bars (5) are connected by means of a horizontal crossbar (8) and the chamber (1) door (9) is fixed to the frame (3) post (4) using hinges (17). In the other version, the chamber (1) has no frame (3) and takes the form of a uniform shell (15) made from plastic laminates, while the chamber (1) door (9) is fixed to the shell (15) using hinges (17).

According to the invention, the horse trailer tack room is characterised in that it is a self-supporting chamber (1) installed in the chamber to its permanent components in a detachable way, the chamber (1) being open from the top, from the bottom, from the front and having a shape resembling letter "V" and having door (9) being side walls (2) of the chamber (1).

## Description

### Technical field:

The subject of this invention is a horse trailer and horse trailer tack room.

### State of the art:

A known horse trailer contains a room, the so-called tack room, which constitutes a fixed part of the said trailer. The tack room is designed for storing saddles and other horse equipment. The tack room is situated in the front part of the trailer and separated with a wall from the part where horses are transported. The tack room can be accessed through the door in the side wall of the trailer. Known tack room fit-out, due to its permanent connection to the trailer, is a use-related disadvantage of the trailer.

At present, horse trailers are manufactured in two versions.

The first one is a trailer without the tack room when a user can use single large space in the form of a single room for horse transport, but there is no separated space to store equipment, including but not limited to a saddle or saddles.

The other version is a trailer with the tack room when the user has smaller space to transport horses and a permanent space in the trailer being a tack room, separated from the horse transport one with a wall. In this version, the user can store horse equipment in a separate room, i.e. a tack room. There are no known tack rooms which can make an optional component of a horse trailer.

### Disadvantages of a known solution (inconvenience):

In the known trailers, it is not possible to change configuration when the trailer is used. A customer selecting one of the above versions cannot reconfigure it. This is a significant disadvantage when using the trailer.

### The purpose of the invention:

To eliminate the above disadvantages, a solution was developed which enables to install a detachable tack room in the horse trailer in a form of a separate chamber. Thanks to that, one horse trailer can be used in two options, i.e. with or without the tack room.

### The nature of the invention:

A horse trailer being the invention, having side walls, a roof, a front wall and a tilting rear wall, resting on a wheeled chassis with a floor, with the trailer composed of space to transport a horse or horses and space constituting a tack room to transport and store saddles and other accessories in the front part of the trailer and separated from the part where a horse is or horses are transported, is characterised in that the tack room is a self-supporting chamber fixed in the trailer to its permanent components in a detachable way, the chamber shape resembling letter "V" and having door constituting side walls of the chamber.

In the first version, the chamber installed in the trailer has a frame made from a vertical U-iron post with obtuse arms, from which, in its upper part, there are two horizontal angle bars led towards the chamber front, their ends connected to vertical profiles, while in the lower part of the vertical post there are two horizontal angle bars connected to the lower endings of the vertical profiles, and the upper angle bars are connected by means of a horizontal crossbar and the chamber door is fixed to the frame post using hinges.

In the other version, the chamber installed in the trailer has no frame and takes the form of a uniform shell made from plastic laminates, while the chamber door is fixed to the shell using hinges.
The chamber installed in the trailer in one of the versions is composed of the basic part with a flat, horizontal upper edging, while in the other version the chamber is composed of a basic part with a flat, horizontal upper edging and an upper section which in its side view has a shape of a triangle with an inclined upper side, this upper section being fixed to the upper edging of the basic part, while in another version the chamber is made from the basic part with a flat, horizontal upper edging and an upper section, which in its side view has a shape resembling a trapezium with an inclined convex upper side, this upper section being fixed to the upper edging of the basic part.

According to the invention, the horse trailer tack room is characterised in that it is a self-supporting chamber installed in the trailer to its permanent components in a detachable way, the chamber being open from the top, from the bottom, from the front and having a shape resembling letter "V" and having door being side walls of the chamber.
The chamber in the first version has a frame made from a vertical U-iron post with obtuse arms, from which, in its upper part, there are two horizontal angle bars led towards the chamber front, their ends connected to vertical profiles, while in the lower part of the vertical post there are two horizontal angle bars connected to the lower endings of the vertical profiles, and the upper angle bars are connected by means of a horizontal crossbar and the chamber door is fixed to the frame post using hinges.
The chamber in the other version has no frame and takes the form of a uniform shell made from plastic laminates, while the chamber door is fixed to the shell using hinges.
The chamber in one of the versions is composed of the basic part with a flat, horizontal upper edging, while in the other version the chamber is composed of a basic part with a flat, horizontal upper edging and an upper section which in its side view has a shape of a triangle with an inclined upper side, this upper section being fixed to the upper edging of the basic part, while in another version the chamber is made from the basic part with a flat, horizontal upper edging and an upper section, which in its side view has a shape resembling a trapezium with an inclined convex upper side, this upper section being fixed to the upper edging of the basic part.

### Advantages (positive results of the invention):

The basic advantage of the solution according to the invention is that the tack room in the form of the chamber, thanks to the detachable connection to the trailer, is a modular structure enabling to install the chamber in the front part of the trailer fast and easily depending on the user's needs which offers a trailer with the tack room, and to remove the chamber from the trailer which offers a trailer without the tack room.

The chamber is a separate trailer component which can be installed in and removed from the trailer any time.

The chamber installed in the front part of the trailer has two functions which are highly useful when transporting horses. In the first function, it is a store where saddles and other accessories are transported, and in the other one side walls of the chamber separate horses, preventing any contact of their heads.

### Description of the invention:

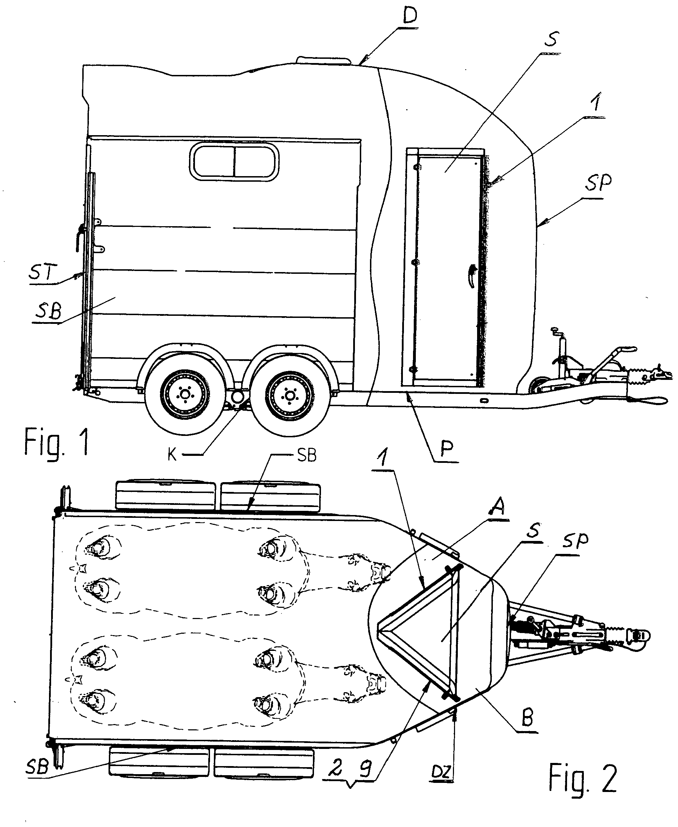

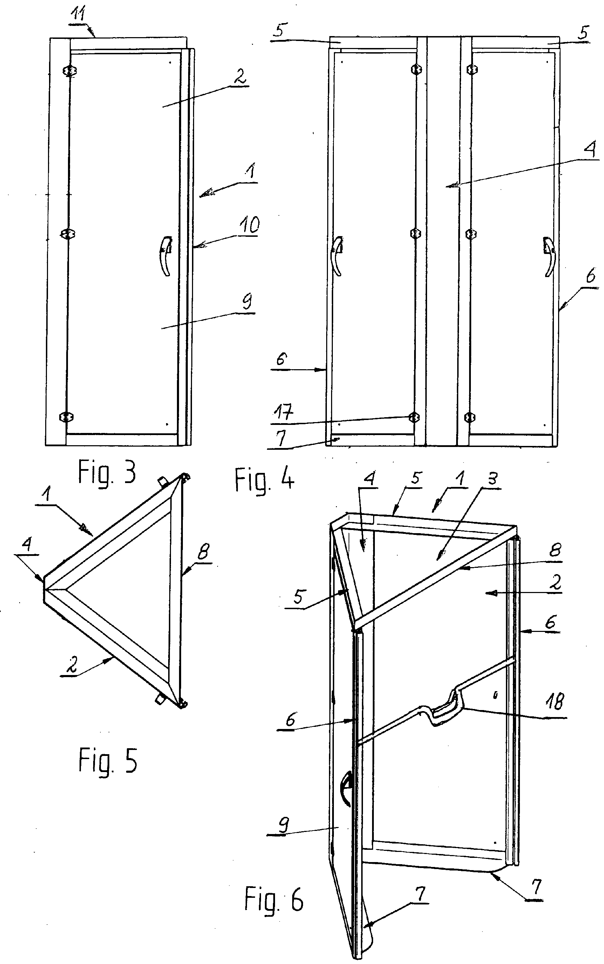

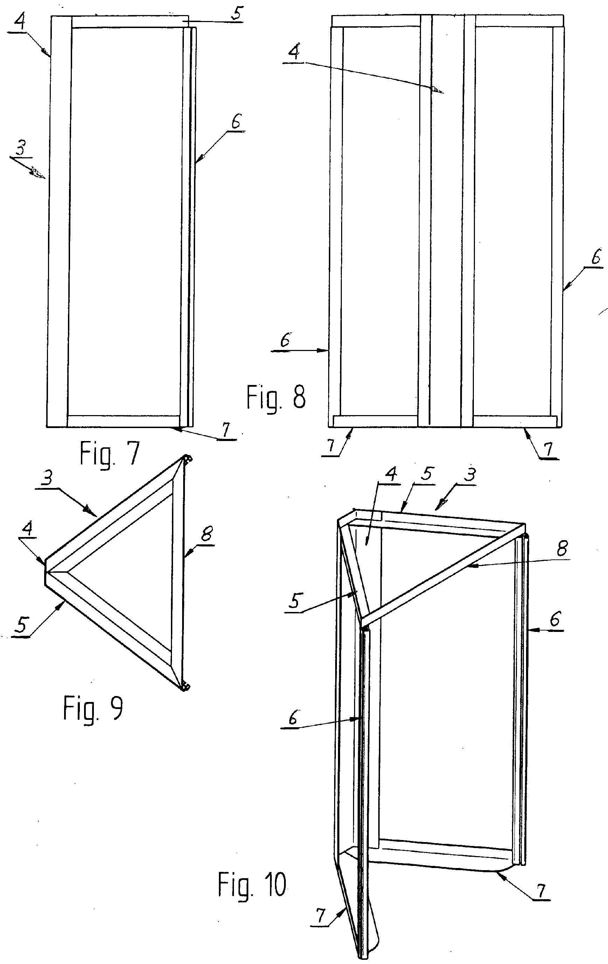

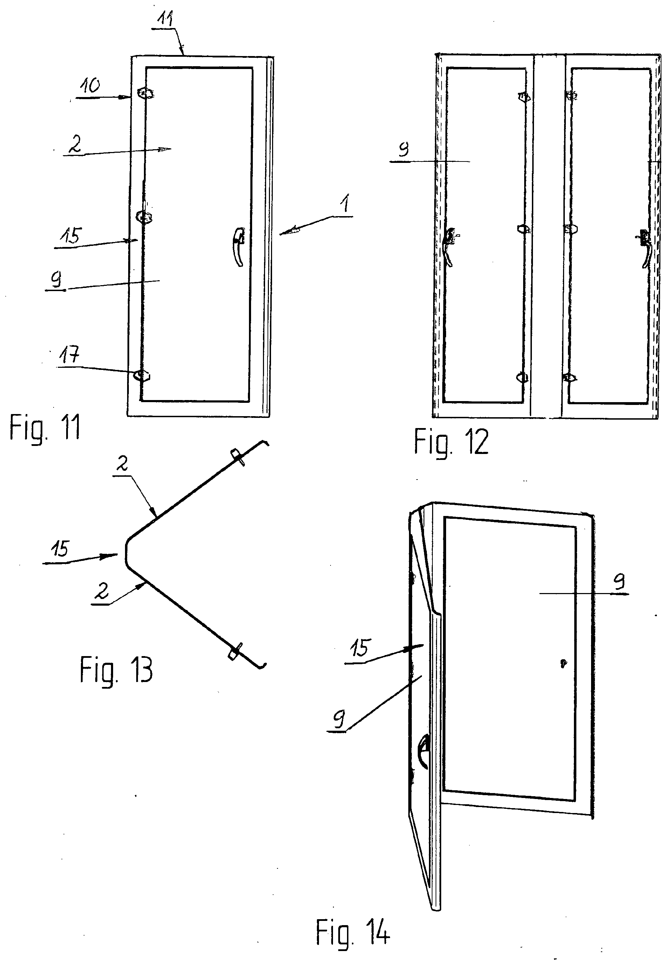

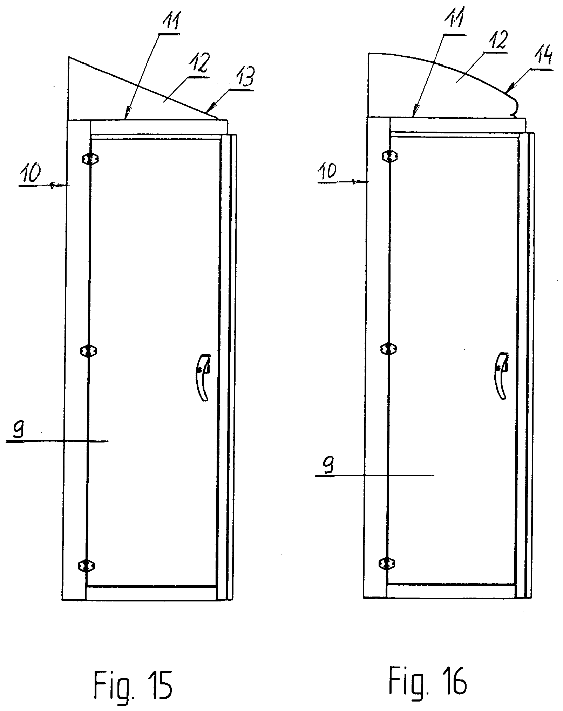

The subject of the invention is presented in the example of the execution of the invention, where fig.1 depicts a trailer with the tack room in the form of a chamber installed in a detachable way in its side view, fig.2 - a trailer with the tack room in the form of a chamber installed in a detachable way in its plan view, fig.3 - a chamber with a frame in a side view, fig.4 - a chamber with a frame in a rear view, fig.5 - a chamber with a frame in a plan view, fig.6 - a chamber with a frame in an isometric projection, fig.7 - a chamber frame in a side view, fig.8 - a chamber frame in a rear view, fig.9 - a chamber frame in a plan view, fig.10 - a chamber frame in an isometric projection, fig.11 - a chamber in the form of a shell in a side view, fig.12 - a chamber in the form of a shell in a rear view, fig.13 - a chamber in the form of a shell in a plan view, fig.14 - a chamber in the form of a shell in an isometric projection, fig.15 - a chamber with the triangular upper section with an inclined upper side, fig.16 - a chamber with the upper section in the shape resembling a trapezium with an inclined convex side

### An example of the execution of the invention:

According to the invention, the horse trailer is composed of side walls SB, a roof D, a front wall SP and a tilting rear wall ST, resting on a wheeled chassis K with the floor P. The trailer has horse transport space A and space B constituting the tack room S situated in the front part of the trailer and separated from space A where horses are transported. The tilting rear wall ST, when open, makes a ramp to bring a horse or horses in and out of the trailer.

The tack room S has a form of a self-supporting chamber 1 installed in the horse trailer in a detachable way. The chamber 1 is fixed to the permanent trailer components, i.e. to the floor P, by means of bolts or other quick-fixing components.

The chamber 1 has a form resembling letter "V". The chamber 1 has door 9 open to the outside of the chamber 1. The door 9 is also side walls 2.

The chamber 1 can be made in two versions.

In the first version, the chamber 1 has a frame 3. The frame 3 is made from a vertical U-iron post 4 with obtuse arms from which, in its upper part, there are two horizontal angle bars 5 led towards the chamber 1 front, their ends connected to vertical profiles 6. In the lower part of the vertical post 4, there are two horizontal angle bars 7 connected to the lower endings of the vertical profiles 6. The upper angle bars 5 are connected by means of a horizontal crossbar 8. The frame 3 is made from metal, preferably from aluminium. Vertical profiles 6 take the form of a profiled section. In the chamber 1 made in the first version, the door 9 is fixed to the post 4 of the frame 3 by means of hinges 17.

In the other version, the chamber 1 has no frame 3 and takes the form of a uniform shell 15 made from plastic laminates. In the chamber 1 made in the other version, the door 9 is fixed to the shell 15 by means of hinges 17.

The chamber 1 in one of the versions is composed of the basic part 10 with a flat, horizontal upper edging 11 and, thanks to it, it can be installed in trailers with different shape of the front part of the roof D. In this case, the upper edging 11 of the chamber 1 does not adjoin the front part of the roof D- the space between the chamber 1 and the roof D is not built-up.

The chamber 1 in another version is composed of the basic part 10 with a flat, horizontal upper edging 11 and an upper section 12, which has a shape of a triangle with an inclined upper side 13 in its side view, the upper section 12 being fixed to the upper edging 11 of the basic part 10. In this case, the upper edging 11 of the chamber 1 adjoins the front part of the roof D or is slightly off it. This version can be used for the trailer with the roof D which is inclined and also flat in its front part.

The chamber 1 in yet another version is composed of the basic part 10 with a flat, horizontal upper edging 11 and an upper section 12, which has a shape resembling a trapezium with an inclined convex upper side 14 in its side view, the upper section 12 being fixed to the upper edging 11 of the basic part 10. In this case, the upper edging 11 of the chamber 1 adjoins the front part of the roof D or is slightly off it. This version can be used for the trailer with the roof D which is inclined and also convex in its front part.

In the chamber 1, in its front part, depending on the user's needs, it is possible to install one or more saddle racks 18. Every rack 18 is installed on vertical profile sections 6. What is more, in the chamber 1 it is possible to install hooks and shelves to fix horse equipment.

According to the invention, the horse trailer tack room takes the form of a self-supporting chamber 1 which can be installed in the horse trailer in a detachable way. The chamber 1 is fixed to the permanent trailer components, i.e. to the floor P, by means of bolts or other quick-fixing components.

The chamber 1 is open from the top, bottom and front. The chamber 1 has a form resembling letter "V". The chamber 1 has door 9 open to the outside of the chamber 1. The door 9 is also side walls 2.

The chamber 1 can be made in two versions.

In the first version, the chamber 1 has a frame 3. The frame 3 is made from a vertical U-iron post 4 with obtuse arms from which, in its upper part, there are two horizontal angle bars 5 led towards the chamber 1 front, their ends connected to vertical profiles 6. In the lower part of the vertical post 4, there are two horizontal angle bars 7 connected to the lower endings of the vertical profiles 6. The upper angle bars 5 are connected by means of a horizontal crossbar 8. The frame 3 is made from metal, preferably from aluminium. Vertical profiles 6 take the form of a profiled section. In the chamber 1 made in the first version, the door 9 is fixed to the post 4 of the frame 3 by means of hinges 17.

In the other version, the chamber 1 has no frame 3 and takes the form of a uniform shell 15 made from plastic laminates. In the chamber 1 made in the other version, the door 9 is fixed to the shell 15 by means of hinges 17.

The chamber 1 in one of the versions is composed of the basic part 10 with a flat, horizontal upper edging 11 and, thanks to it, it can be installed in trailers with different shape of the front part of the roof D. In that case, the upper edging 11 of the chamber 1 does not adjoin the front part of the roof D - the space between the chamber 1 and the roof D is not built-up.

The chamber 1 in another version is composed of the basic part 10 with a flat, horizontal upper edging 11 and an upper section 12, which has a shape of a triangle with an inclined upper side 13 in its side view, the upper section 12 being fixed to the upper edging 11 of the basic part 10. In that case, the upper edging 11 of the chamber 1 adjoins the front part of the roof D or is slightly off it. This version can be used for the trailer with the roof D which is inclined and also flat in its front part.

The chamber 1 in yet another version is composed of the basic part 10 with a flat, horizontal upper edging 11 and an upper section 12, which has a shape resembling a trapezium with an inclined convex upper side 14 in its side view, the upper section 12 being fixed to the upper edging 11 of the basic part 10. In that case, the upper edging 11 of the chamber 1 adjoins the front part of the roof D or is slightly off it. This version can be used for the trailer with the roof D which is inclined and also convex in its front part.

In the chamber 1, in its front part, depending on the user's needs, it is possible to install one or more saddle racks 18. Every rack 18 is installed on vertical profile sections 6. What is more, in the chamber 1 it is possible to install hooks and shelves to fix horse equipment.

The chamber 1 is installed in the horse trailer by inserting it inside the trailer from the back. After the chamber 1 is installed in the trailer, access to the interior of the chamber 1 making the tack room takes place by opening the door DZ of the trailer situated in the front part of the trailer and then by opening the doors 9 of the chamber 1.

## Claims

1. A horse trailer, having side walls, a roof, a front wall and a tilting rear wall, resting on a wheeled chassis with a floor, with the trailer composed of space to transport a horse or horses and space constituting a tack room to transport and store saddles and other accessories in the front part of the trailer and separated from the part where a horse is or horses are transported, **characterised in that** the tack room (S) is a self-supporting chamber (1) fixed in the trailer to its permanent components in a detachable way, the chamber (1) shape resembling letter "V" and having door (9) constituting side walls (2) of the chamber (1).

2. The trailer, according to claim 1, **characterised in that** the chamber (1) has a frame (3) made from a vertical U-iron post (4) with obtuse arms, from which, in its upper part, there are two horizontal angle bars (5) led towards the chamber (1) front, their ends connected to vertical profiles (6), while in the lower part of the vertical post (4) there are two horizontal angle bars (7) connected to the lower endings of the vertical profiles (6), and the upper angle bars (5) are connected by means of a horizontal crossbar (8) and the chamber (1) door (9) is fixed to the frame (3) post (4) using hinges (17).

3. The trailer, according to claim 1, **characterised in that** the chamber (1) has no frame (3) and takes the form of a uniform shell (15) made from plastic laminates, while the door (9) of the chamber (1) is fixed to the shell (15) by means of hinges (17).

4. The trailer, according to claim 1, **characterised in that** the chamber (1) is composed of the basic part (10) with a flat, horizontal upper edging (11).

5. The trailer, according to claim 1, **characterised in that** the chamber (1) is composed of the basic part (10) with a flat, horizontal upper edging (11) and an upper section (12), which has a shape of a triangle with an inclined upper side (13) in its side view, the upper section (12) being fixed to the upper edging (11) of the basic part (10).

6. The trailer, according to claim 1, **characterised in that** the chamber (1) is composed of the basic part (10) with a flat, horizontal upper edging (11) and an upper section (12), which has a shape of resembling a trapezium with an inclined convex upper side (14) in its side view, the upper section (12) being fixed to the upper edging (11) of the basic part (10).

7. The horse trailer tack room **is characterised in that** it is a self-supporting chamber (1) installed in the chamber to its permanent components in a detachable way, the chamber (1) being open from the top, from the bottom, from the front and having a shape resembling letter "V", and having door (9) being side walls (2) of the chamber (1).

8. The tack room, according to claim 7, **characterised in that** the chamber (1) has a frame (3) made from a vertical U-iron post (4) with obtuse arms, from which, in its upper part, there are two horizontal angle bars (5) led towards the chamber (1) front, their ends connected to vertical profiles (6), while in the lower part of the vertical post (4) there are two horizontal angle bars (7) connected to the lower endings of the vertical profiles (6), while the upper angle bars (5) are connected by means of a horizontal crossbar (8) and the chamber (1) door (9) is fixed to the frame (3) post (4) using hinges (17).

9. The tack room, according to claim 7, **characterised in that** the chamber (1) has no frame (3) and takes the form of a uniform shell (15) made from plastic laminates, while the door (9) of the chamber (1) is fixed to the shell (15) by means of hinges (17).

10. The tack room, according to claim 7, **characterised in that** the chamber (1) is composed of the basic part (10) with a flat, horizontal upper edging (11).

11. The tack room, according to claim 7, **characterised in that** the chamber (1) is composed of the basic part (10) with a flat, horizontal upper edging 11 and an upper section (12), which has a shape of a triangle with an inclined upper side (13) in its side view, the upper section (12) being fixed to the upper edging (11) of the basic part (10).

12. The tack room, according to claim 7, **characterised in that** the chamber (1) is composed of the basic part (10) with a flat, horizontal upper edging (11) and an upper section (12), which has a shape resembling a trapezium with an inclined convex upper side (14) in its side view, the upper section (12) being fixed to the upper edging (11) of the basic part (10).
